# FASCICULE DE BREVET EUROPEEN

(11) **EP 1 918 599 B1**
(45) Date de publication et mention de la délivrance du brevet: **22.01.2014**
(21) Numéro de dépôt: 07119007.8
(22) Date de dépôt: 22.10.2007
(51) Int. Cl.: F16D 13/75

(54) **Embrayage pour véhicules automobiles à dispositif amélioré d'équilibrage de "cordon rampe "**
Kupplung für Kraftfahrzeuge mit verbesserter Vorrichtung zum Ausgleich der Rampe
Clutch for automobiles with improved device for ramp balancing

(30) Priorité: 30.10.2006 FR 0654639
(43) Date de publication de la demande: 07.05.2008
(73) Titulaire: Valeo Embrayages, 80009 Amiens (FR)
(72) Inventeur: Osman, Hafiz, 80000 Amiens (FR); Payraudeau, Gilles, 80310 Saint Vaast en Chaussée (FR); Houziaux, Nicolas, 80630 Beauval (FR); Ishii, Yuji, 80000 Amiens (FR)
(74) Mandataire: Tran, Chi-Hai

(56) Documents cités:
- EP-A2- 0 769 632
- FR-A1- 2 847 626
- US-B1- 6 334 521

## Description

La présente invention concerne le domaine des embrayages pour véhicules automobiles, destinés à assurer la jonction mécanique et la transmission entre le moteur du véhicule et la boîte de vitesses.

Les embrayages comportent de manière connue:
-- D'une part : un volant moteur lié au moteur du véhicule, et entraînant en rotation le mécanisme de l'embrayage à savoir : un élément annulaire dénommé « couvercle » et incluant à l'intérieur un plateau de pression annulaire, et un élément élastique actionnant le plateau et dénommé « diaphragme » ;
-- D'autre part : un disque pourvu de garnitures de friction, entraînant la rotation de l'arbre primaire de la boîte de vitesses.

La position débrayée ou embrayée est commandée par l'utilisateur par l'intermédiaire d'une pédale qui déplace une butée, disposée sur l'arbre primaire de boîte de vitesses. La butée actionne le diaphragme qui commande le déplacement axial du plateau de pression, de manière que ce dernier porte contre la « friction » et entraîne donc celle-ci (position embrayée), ou est décalé par rapport au disque de friction (position débrayée).

En outre, les embrayages connus comportent des dispositifs dits de «rattrapage de jeu» destinés à faire en sorte notamment que la distance parcourue par le plateau de pression, dite «la levée de plateau», soit sensiblement constante au fur et à mesure de l'usure du disque de friction.

La demande de brevet européen n° 0 769 632 décrit un tel dispositif de rattrapage de jeu, qui comporte entre autre un élément intermédiaire annulaire entre le plateau de pression et le diaphragme, et dénommé « cordon rampe». Le plateau et le cordon rampe sont pourvus sur leur face en regard de rampes complémentaires. Le cordon rampe est solidaire d'un secteur de roue dentée, associée à une vis sans fin.

Schématiquement, au fur et à mesure que les garnitures de friction s'usent, et que cette usure est détectée, le cordon rampe est déplacé en rotation de manière incrémentale, selon des valeurs d'angle extrêmement faibles prédéterminées. Du fait de la coopération des rampes respectives sur le plateau et le cordon rampe, la rotation du cordon entraîne le déplacement axial du point de contact du plateau avec le diaphragme, selon une distance très petite équivalente sensiblement à l'usure détectée, suffisante pour le placer à nouveau à une distance adéquate du disque de friction, le diaphragme étant alors toujours dans le même intervalle de conicité.

Le secteur denté, constitué d'une pièce rapportée et fixée par rivet (ou similaire) sur une partie de la périphérie du cordon rampe, entraîne un balourd statique et dynamique de ce dernier.

Or, l'ensemble des pièces en rotation de l'embrayage doit être exempt de vibrations. Il est donc fondamental de supprimer ledit balourd.

Un embrayage connu est décrit dans FR-A-2 847 626.

Le document FR - A1 - 2 847 627 prévoit à cette fin une pièce supplémentaire d'équilibrage, de forme et de poids adaptés audit secteur denté, et fixée par rivetage sur des pattes du cordon rampe à l'opposé (diamétralement) du secteur denté.

Ce dispositif connu ne donne pas satisfaction.

En effet, la pièce additionnelle d'équilibrage entraîne un surcoût à la fabrication et au montage (résultant de la fixation par trois rivets en général).

La présente invention vise à remédier à ce problème et propose un ensemble des moyens permettant d'équilibrer de façon statique et dynamique le secteur denté, du mécanisme de rattrapage de jeu, inclus dans un mécanisme d'embrayage pour véhicule automobile, et ce de manière simple et économique, tout en réalisant un équilibrage adéquat.

A cette fin, selon invention, l'embrayage pour véhicule automobile, comprenant un volant moteur entraînant en rotation un couvercle angulaire, un plateau de pression annulaire, un diaphragme d'actionnement du plateau de pression un disque pourvu de garnitures de friction, destiné à être lié à un arbre primaire de boîte de vitesses, l'embrayage comportant en outre un dispositif de rattrapage de jeu apte à ramener axialement le plateau de pression vers le disque de friction au fur et à mesure de l'usure de ce dernier, ledit dispositif comprenant d'une part un cordon rampe annulaire interposé entre ledit plateau et le diaphragme, et portant contre le plateau de pression par des rampes complémentaires de rampes prévues sur ledit plateau, et d'autre part un secteur denté fixé audit cordon rampe pour l'entrainer en rotation, et des moyens d'équilibrage du secteur denté est caractérisé en ce que les moyens d'équilibrage sont d'une seule pièce avec le cordon rampe, et en ce que les moyens d'équilibrage sont situés dans un plan axial et forment également des moyens de maintien du cordon rampe sur le plateau de pression.

Plus précisément, les moyens d'équilibrage sont disposés en périphérie extérieure et/ou intérieure du cordon rampe.

Selon une forme préférée, le cordon rampe comporte au moins une partie d'équilibrage, sous la forme d'au moins une ailette, patte, languette ou similaire, dont le poids et !'emplacement compensent et équilibrent ledit secteur denté.

Avantageusement, il est prévu plusieurs pattes, ailettes ou languettes, réparties régulièrement sur la périphérie du cordon rampe.

Ladite partie d'équilibrage est située soit dans le plan radial, soit dans une combinaison de deux plans du cordon rampe.

De préférence, les pattes, ailettes ou languettes, situées dans un plan radial, sont sensiblement planes.

Selon une forme de réalisation, la ou les pattes, ailettes ou languettes est/sont formée(s) chacune d'une plaque de matière, dont au moins une partie de leur bord périphérique est repliée sur elle-même, pour former un rabat (créant ainsi une double épaisseur).

L'invention concerne également un ensemble cordon rampe-plateau de pression.

Plus précisément, le cordon rampe comprends un secteur denté d'entraînement en rotation, et est formé d'une seule pièce avec des pattes, ailettes ou languettes d'équilibrage en rotation du secteur denté. Les pattes, ailettes ou languettes d'équilibrage sont situés dans un plan axial et forment également des moyens de maintien du cordon rampe sur le plateau de pression.

L'invention sera bien comprise à la lumière de la description qui suit, se rapportant à des exemples illustratif mais non limitatifs, en liaison avec les dessins annexés dans lesquels :
La figure 1 est une vue en coupe axiale d'une partie d'embrayage à laquelle s'applique l'invention.
Les figures 2 à 5 montrent en perspective quatre formes différentes de réalisation du cordon rampe pourvu de moyens d'équilibrage de l'invention.
La figure 6 montre une vue partielle du cordon rampe pourvue d'une autre forme de réalisation des moyens d'équilibrage.

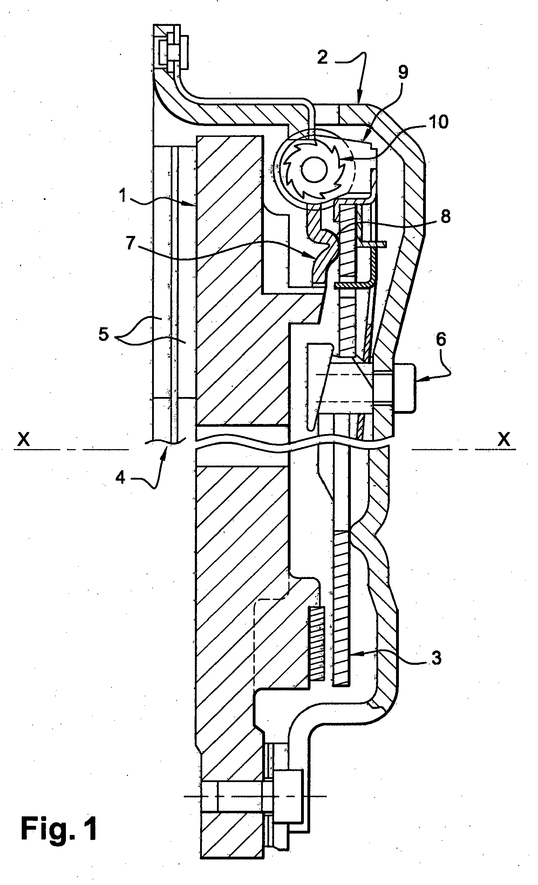

La figure 1 représente en coupe une partie d'un embrayage pour véhicule automobile, auquel s'applique la présente invention. Seule une partie des éléments est présentement décrite, et l'homme de l'art pourra trouver de plus amples informations concernant l'embrayage dans sa généralité, dans la demande de brevet européen n° 0 769 632.

Les embrayages à friction pour véhicule automobile comportent de manière générale un mécanisme incluant un volant moteur (non représenté et connu en lui-même) entraîné par le moteur, un plateau de pression 1, disposé dans un élément 2, appelé couvercle, et un élément d'actionnement appelé diaphragme 3. Ces éléments sont entraînés en rotation par un arbre (non représenté) symbolisé par l'axe X-X, et relié en amont au moteur.

Un mécanisme à pédale et bague, non représenté et connu en lui-même, agit sur le diaphragme 3 qui déplace axialement le plateau de pression 1 de manière à frotter contre un disque de friction 4 portant des garnitures de friction 5. Le diaphragme 3 et le couvercle 2 sont reliés par des corps cylindriques 6 ou tout autre dispositif permettant l'articulation du diaphragme.

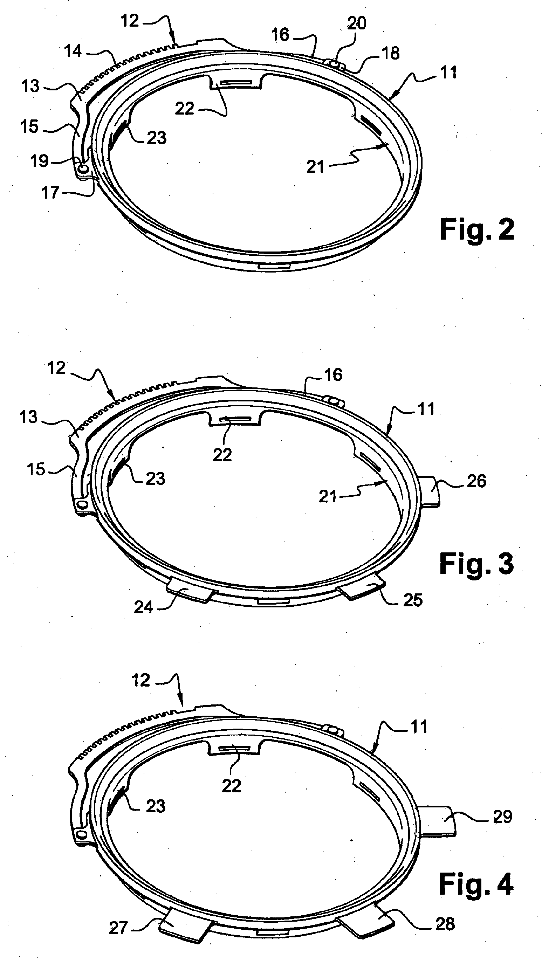

Le diaphragme 3 porte contre le plateau de pression 1 par l'intermédiaire de moyens à rampe 7, selon une zone d'appui 8. Les moyens à rampe comportent un élément annulaire appelé cordon rampe, décrit plus en détail en relation avec les figures 2 à 5, ci-après, et pourvu sur sa face interne de rampes, susceptibles de coopérer avec des rampes complémentaires prévues sur la face externe du plateau de pression 1.

Il est prévu également un mécanisme 9 de rattrapage de jeu, connu en lui-même, et décrit plus en détail dans la demande de brevet mentionnée ci-dessus. Ce mécanisme 9 est destiné à déplacer axialement le plateau de pression à une distance optimale, quel que soit le degré d'usure des garnitures de friction 5.

Le mécanisme 9 de rattrapage de jeu inclut une roue à rochet 10 montée sur un axe sur lequel est disposée une vis sans fin (non représentée).

La vis sans fin coopère avec une partie de roue dentée, constituée d'un secteur annulaire denté, solidaire du cordon rampe 11.

Les figures 2 à 5 représentent en perspective un cordon rampe 11, selon l'invention, sur la périphérie duquel est rapporté et fixé un secteur denté 12. Ce dernier est connu en lui-même et comporte un secteur circulaire 13 pourvu de dents 14 coopérant avec la vis sans fin du dispositif de rattrapage de jeu.

À chaque extrémité du secteur denté circulaire 13 est prévue une aile latérale respectivement 15 et 16, de forme courbe. L'extrémité distale de chaque aile 15 et 16 est fixée, de manière connue sur le cordon rampe 11, sur une patte 17, respectivement 18, par des rivets 19 et 20.

On comprend que la présence du secteur denté 12 constitue un balourd dynamique et statique qui affecte la rotation du cordon rampe, et qu'il convient d'équilibrer.

L'invention propose des moyens permettant d'équilibrer le cordon rampe compte tenu de la présence excentrée radialement du secteur denté 12.

Les moyens d'équilibrage sont, selon l'invention, intégrés et/ou font partie du cordon rampe.

Plus précisément, en référence aux figures 2 à 5, on décrit ci-après des formes différentes de réalisation desdits moyens d'équilibrage.

Ces derniers sont constitués d'éléments situés sur la périphérie du cordon rampe, sous la forme de pattes, ailettes ou languettes, formant des secteurs annulaires, dépassant du corps annulaire proprement dit du cordon rampe.

Selon une première forme de réalisation montrée sur la figure 2, les moyens d'équilibrage sont constitués d'un secteur annulaire continu 21, disposé suivant une direction axiale, c'est-à-dire parallèle à l'axe de rotation X-X du cordon rampe 11 et des éléments associés (notamment le plateau de pression).

Ce secteur annulaire continu 21 constitue un secteur d'équilibrage.

Il est disposé selon un angle sectoriel de 120° à 200°, de préférence de l'ordre de 180°, et faisant face au secteur annulaire du secteur denté 12. Ledit secteur 21 d'équilibrage présente une dimension axiale de10 à 30 mm, de préférence comprise entre 10 et 30 mm.

Par ailleurs, comme montré sur la figure 2, le secteur d'équilibrage annulaire 21 forme, avec deux autres pattes 22 et 23, dites pattes de contact, disposées du côté du secteur denté 12, un ensemble de maintien du cordon rampe sur le plateau de pression, par contact du secteur 21, et des pattes 22 et 23, sur la surface intérieure annulaire axiale du plateau 1. Ce système de positionnement du cordon rampe par rapport au plateau 1 fait l'objet d'une demande de brevet déposée au nom de la demanderesse, ce même jour.

Sur la figure 3, on a représenté une variante de réalisation de l'invention, où les éléments similaires aux autres figures portent les mêmes références. Ainsi, on retrouve les deux pattes de contact 22 et 23, ainsi que le secteur annulaire 21 ayant un double rôle d'une part de contact entre le cordon rampe 11 et le plateau de pression 1, et d'autre part d'équilibrage du secteur denté 12.

Selon cette variante, les moyens d'équilibrage, outre le secteur annulaire 21, comportent une série de languettes, au nombre de trois en l'occurrence, et portant les références 24, 25 et 26. Ces dernières sont disposées selon un angle sectoriel d'environ 120°, de manière opposée diamétralement au secteur denté 12, et présente une forme de rectangle, dans le plan radial du cordon rampe 11. Par exemple, elle présente une dimension en longueur circonférentielle comprise entre 15 et 60 mm, et une largeur dans le sens radial comprise entre 10 et 50 mm, et de préférence entre 20 et 35 mm. Ces dimensions sont données à titre d'exemple pour un cordon rampe de diamètre intérieur de l'ordre de 200 mm.

Sur la figure 4, on a représenté encore une autre variante où on retrouve à nouveau les pattes de contact 22 et 23, du côté du secteur denté 12. A l'opposé de ces derniers, sont disposés d'une part un récepteur annulaire 21 (de contact et d'équilibrage), et d'autre part une série de trois languettes 27, 28 et 29, similaires aux languettes 24, 25 et 26 de la figure 3, mais présentant une dimension en largeur, c'est-à-dire suivant une direction radiale, plus importante que les languettes de la figure 3.

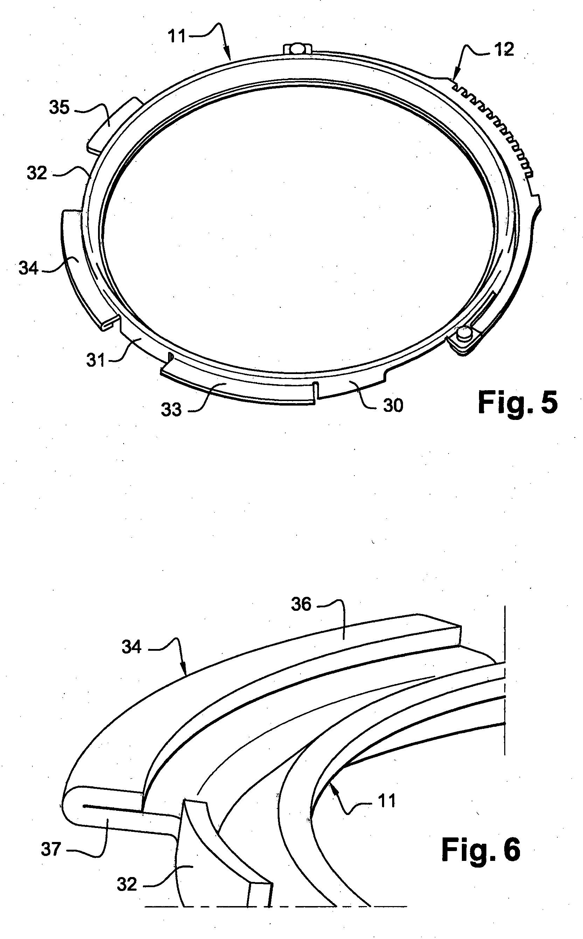

La figure 5 montre une autre variante de réalisation, où les moyens d'équilibrage sont constitués, d'une part de trois pattes disposées dans un plan transversal au plan du cordon rampe, référencées 30, 31 et 32 (la patte 32 n'étant pas visible sur la figure), et de trois languettes dans le plan radial du cordon rampe 11, référencées 33, 34 et 35. Les trois languettes dites radiales présentent une dimension dans le sens de la circonférence plus grande que les formes de réalisation des figures 3 et 4, mais une dimension dans le sens radial plus petite.

On a représenté sur la figure 6, une vue partielle montrant en détail une des pattes radiales 34 d'équilibrage et une des pattes transversales 32.

En l'occurrence, la patte radiale 34 comporte, à sa partie distale (dans une direction centrifuge), un rabat 36 constitué par le repliement sur elle-même de la patte, pour constituer une double épaisseur avec la partie principale 37. Une seule, certaines, ou toutes les pattes radiales peuvent être configurées avec un tel rabat. Il est également possible qu'une partie seulement de chaque patte présente un rabat.

La disposition et le nombre de rabats et leur proportion, pour chaque languette, dépendent des paramètres d'équilibrage.

Également, il résulte de la description des figures 2 à 6, que la dimension, le nombre, la disposition et la répartition des pattes ou languettes formant moyens d'équilibrage dépendent de plusieurs facteurs, et notamment le poids et la disposition du secteur denté ; le but étant que les pattes ou languettes d'équilibrage compensent, en termes de balourd statique et dynamique, le secteur denté 11.

## Revendications

1. Embrayage pour véhicule automobile, comprenant un volant moteur entraînant en rotation un couvercle annulaire (2), incluant à l'intérieur un plateau de pression (1) et un diaphragme d'actionnement du plateau de pression et un disque (4) pourvu de garnitures de friction (5), destiné à être lié à un arbre primaire de boîte de vitesses, l'embrayage comportant en outre un dispositif (9) de rattrapage de jeu apte à ramener axialement le plateau de pression (1) vers le disque de friction (4), au fur et à mesure de l'usure de ce dernier, ledit dispositif comprenant d'une part un cordon rampe annulaire (11) entre ledit plateau (1) et le diaphragme (3), et portant contre le plateau de pression (1) par des rampes (7) complémentaires de rampes prévues (11) sur ledit plateau (1), et d'autre part un secteur denté (14) fixé audit cordon rampe (11) pour l'entraîner en rotation des moyens d'équilibrage (21-25) du secteur denté,
**caractérisé en ce que** les moyens d'équilibrage sont d'une seule pièce avec le cordon rampe (11), et **en ce que** les moyens d'équilibrage sont situés dans un plan axial et forment également des moyens de maintien du cordon rampe (11) sur le plateau de pression (1).

2. Embrayage selon l'une des revendications précédentes, caractérisé en ce tel que les moyens d'équilibrage sont disposés en périphérie extérieure et/ou intérieure du cordon rampe (11).

3. Embrayage selon l'une des revendications précédentes, **caractérisé en ce que** les moyens d'équilibrage (21-25), s'étendent dans le plan radial du cordon rampe (11).

4. Embrayage selon la revendication 3, **caractérisé en ce que** les moyens d'équilibrage comprennent des pattes, ailettes ou languettes (21-25), réparties sur la périphérie du cordon rampe (11).

5. Embrayage selon la revendication 4, **caractérisé en ce que** les pattes, ailettes ou languettes (21-25), situées dans un plan radial, sont sensiblement planes.

6. Embrayage selon l'une des revendications 3 à 5, **caractérisé en ce que** la ou les pattes, ailettes ou languettes (34) est/sont formée(s) chacune d'une plaque de matière, dont au moins une partie périphérique (36) est repliée sur elle-même.

7. Ensemble cordon rampe - plateau de pression pour un embrayage de véhicule automobile selon l'une des revendications 1 à 6, ledit cordon rampe comprenant un secteur denté (14) d'entraînement en rotation, **caractérisé en ce que** le cordon rampe est formé d'une seule pièce avec des pattes, ailettes ou languettes (21-25) d'équilibrage en rotation du secteur denté (14), et **en ce que** les pattes, ailettes ou languettes (21-25) d'équilibrage sont situés dans un plan axial et forment également des moyens de maintien du cordon rampe (11) sur le plateau de pression (1).

## Patentansprüche

1. Kupplung für ein Kraftfahrzeug, umfassend ein Antriebsschwungrad, welches einen ringförmigen Deckel (2) rotatorisch antreibt, einschließend im Inneren eine Druckplatte (1) und eine Membranfeder zur Betätigung der Druckplatte und eine mit Reibbelägen (5) versehene Scheibe (4), die dazu bestimmt ist, mit einer Primärwelle eines Getriebes verbunden zu werden, wobei die Kupplung außerdem eine Vorrichtung (9) zum Ausgleich von Spiel umfasst, die dazu geeignet ist, die Druckplatte (1) axial in Richtung zu der Reibungsscheibe (4) je nach dem Verschleiß von letzterer zurück zu versetzen, wobei die besagte Vorrichtung einerseits einen ringförmigen Rampen-Gürtel (11) zwischen der Druckplatte (1) und der Membranfeder (3) umfasst, der die Druckplatte (1) durch Rampen (7) beansprucht, die komplementär sind zu auf der besagten Platte (1) vorgesehenen Rampen (11), und die Vorrichtung andererseits einen gezahnten Sektor (14), der an dem besagten Rampen-Gürtel (11) befestigt ist um ihn rotatorisch anzutreiben, und Mittel (21-25) zum Ausgleich des gezahnten Sektors umfasst,
**dadurch gekennzeichnet, dass** die Ausgleichmittel mit dem Rampen-Gürtel (11) **aus einem einzigen Stück bestehen, und dass die** Ausgleichmittel in einer axialen Ebene angeordnet sind und zugleich Mittel zum Halten des Rampen-Gürtels (11) an der Druckplatte (1) bilden.

2. Kupplung nach einem der vorherigen Ansprüche, **dadurch gekennzeichnet, dass** die Ausgleichmittel an dem äußeren und/oder an dem inneren Umfang des Rampen-Gürtels (11) angeordnet sind.

3. Kupplung nach einem der vorherigen Ansprüche, **dadurch gekennzeichnet, dass** sich die Ausgleichmittel (21-25) in der radialen Ebene des Rampen-Gürtels (11) erstrecken.

4. Kupplung nach Anspruch 3, **dadurch gekennzeichnet, dass** die Ausgleichmittel Laschen, Flügel oder Zungen (21-25) umfassen, die über den Umfang des Rampen-Gürtels (11) verteilt sind.

5. Kupplung nach Anspruch 4, **dadurch gekennzeichnet, dass** die in einer radialen Ebene angeordneten Laschen, Flügel oder Zungen (21-25) in etwa eben sind.

6. Kupplung nach einem der Ansprüche 3 bis 5, **dadurch gekennzeichnet, dass** der oder die Lasche(n), Flügel oder Zunge(n) (34) jeweils aus einer Platte von Material gebildet ist/sind, von der zumindest ein Umfangsteil (36) auf sich selbst zusammengefaltet ist.

7. Einheit aus Rampen-Gürtel und Druckplatte für eine Kraftfahrzeug-Kupplung nach einem der Ansprüche 1 bis 6, wobei der besagte Rampen-Gürtel zum roatorischen Antreiben einen gezahnten Sektor (14) umfasst, **dadurch gekennzeichnet, dass** der Rampen-Gürtel mit Laschen, Flügeln oder Zungen (21-25) zum rotatorischen Auswuchten des gezahnten Sektors (14) aus einem einzigen Stück gebildet ist, und dass die Laschen, Flügeln oder Zungen (21-25) zum Auswuchten in einer axialen Ebene angeordnet sind und zugleich Mittel zum Halten des Rampen-Gürtels (11) an der Druckplatte (1) bilden.

## Claims

1. Clutch for a motor vehicle, comprising an engine flywheel which rotates an annular cover (2), including in the interior a pressure plate (1) and a diaphragm for activation of the pressure plate and a disc (4) provided with friction linings (5) which is designed to be connected to a gear box primary shaft, the clutch additionally comprising a device (9) for taking up play which can bring the pressure plate (1) axially towards the friction disc (4) as the latter becomes worn, the said device comprising firstly an annular ramp rim (11) between the said plate (1) and the diaphragm (3), and bearing against the pressure plate (1) by means of ramps (7) which are complementary to ramps (11) provided on the said plate (1), and secondly a toothed sector (14) which is secured to the said ramp rim (11) in order to rotate means (21-25) for balancing the toothed sector,
**characterised in that** the balancing means are integral with the ramp rim (11), and **in that** the balancing means are situated on an axial plane and also form means for retention of the ramp rim (11) on the pressure plate (1).

2. Clutch according to one of the preceding claims, **characterised in that** the balancing means are arranged on the outer periphery and/or the inner periphery of the ramp rim (11).

3. Clutch according to one of the preceding claims, **characterised in that** the balancing means (21-25) extend on the radial plane of the ramp rim (11).

4. Clutch according to claim 3, **characterised in that** the balancing means comprise lugs, fins or tongues (21-25) which are distributed on the periphery of the ramp rim (11).

5. Clutch according to claim 4, **characterised in that** the lugs, fins or tongues (21-25), which are situated on a radial plane, are substantially flat.

6. Clutch according to one of claims 3 to 5, **characterised in that** the lug(s), fin(s) or tongue(s) (34) is/are each formed from a plate of material, at least a peripheral part (36) of which is folded back on itself.

7. Ramp rim - pressure plate assembly for a motor vehicle clutch according to one of claims 1 to 6, the said ramp rim comprising a toothed sector (14) for rotation, **characterised in that** the ramp rim is integral with lugs, fins or tongues (21-25) for balancing in rotation of the toothed sector (14), and **in that** the lugs, fins or tongues (21-25) for balancing are situated on an axial plane, and also form means for retention of the ramp rim (11) on the pressure plate (1).
